# EUROPEAN PATENT APPLICATION

(11) **EP 4 492 539 A1**
(43) Date of publication of application: **15.01.2025**
(21) Application number: 24187750.5
(22) Date of filing: 10.07.2024
(51) Int. Cl.: H01M 10/647, H01M 10/6555, H01M 50/103, H01M 50/112, H01M 50/129

(54) **POWER STORAGE MODULE**

(30) Priority: 10.07.2023 JP 2023112850
(71) Applicant: TOYOTA JIDOSHA KABUSHIKI KAISHA, Aichi-ken, 471-8571 (JP)
(72) Inventor: YAMANAKA, Atsushi, Toyota-shi, 471-8571 (JP); SUGIE, Kazuki, Toyota-shi, 471-8571 (JP); YONEKAWA, Kosuke, Toyota-shi, 471-8571 (JP); CHIHARA, Masashi, Toyota-shi, 471-8571 (JP); OBAYASHI, Yoshiro, Toyota-shi, 471-8571 (JP); SHIMURA, Yosuke, Toyota-shi, 471-8571 (JP); HIRAO, Yasuhiro, Toyota-shi, 471-8571 (JP)
(74) Representative: D Young & Co LLP

(57) **Abstract**

A power storage module includes a case (200) that houses a plurality of electrode assemblies (100). The case (200) includes a case body (210) and at least one partition portion (220). The case body (210) surrounds the plurality of electrode assemblies (100). The partition portion (220) is located between the electrode assemblies (100) adjacent to each other to partition an accommodation space (S) of the case body (210). The partition portion (220) includes a pair of resin layers (220R) and a metal layer (220M). The pair of resin layers (220R) is formed integrally with the case body (210) and the resin layers (220R) are arranged in a first direction (D1). The metal layer (220M) is located between the resin layers (220R) and extends in a direction orthogonal to the first direction (D1).

## Description

### CROSS REFERENCE TO RELATED APPLICATIONS

This nonprovisional application is based on Japanese Patent Application No. 2023-112850 filed on July 10, 2023 with the Japan Patent Office, the entire contents of which are hereby incorporated by reference.

### BACKGROUND

### Field

The present disclosure relates to a power storage module.

### Description of the Background Art

In the housing of the battery case disclosed in Japanese Patent Laying-Open No. 2019-106372, a lower wall and a plurality of (for example, three, four, or more) sidewalls are integrated to form a space inside, an open surface opposed to the lower wall is provided, and one or more (for example, two, three, four, five, or more) partitions are provided in the space. Thereby, the housing includes a plurality of battery compartments separated by one or more partitions disposed in the space. Each battery compartment can accommodate an electrode assembly.

### SUMMARY

In the battery case disclosed in Japanese Patent Laying-Open No. 2019-106372, heat generated from the electrode assembly in one compartment is easily transmitted to the other compartment through the partition.

The present disclosure is given in view of the above problem, and it is an object of the present disclosure to provide a power storage module capable of preventing heat generated from an electrode assembly disposed on one side in a partitioned accommodation space from being transmitted to the other side in the accommodation space through a partition portion.

A power storage module according to the present disclosure includes a plurality of electrode assemblies and a case. The plurality of electrode assemblies are arranged in a first direction. The case houses the plurality of electrode assemblies. The case includes a case body and at least one partition portion. The case body surrounds the plurality of electrode assemblies. The partition portion is located between the electrode assemblies adjacent to each other to partition an accommodation space of the case body. The partition portion includes a pair of resin layers and a metal layer. The pair of resin layers is formed integrally with the case body and the resin layers of the pair are arranged in the first direction. The metal layer is located between the resin layers of the pair and extends in a direction orthogonal to the first direction.

According to the above configuration, the metal layer can prevent heat generated from an electrode assembly disposed on one side in the partitioned accommodation space from being transmitted to the other side of the accommodation space through the partition portion. This is because when the heat is transmitted to the metal layer, the heat is diffused in the direction orthogonal to the first direction, and as a result, the heat is easily discharged to the outside of the case body.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view showing a power storage module according to an embodiment.
Fig. 2 is a partially exploded perspective view of the power storage module according to an embodiment.
Fig. 3 is a cross-sectional view of the power storage module of Fig. 1 taken along a line III-III.
Fig. 4 is a cross-sectional view of the power storage module of Fig. 1 taken along a line IV-IV.
Fig. 5 is a cross-sectional view of an electrode assembly of the power storage module of Fig. 1 taken along a line V-V.

### DESCRIPTION OF THE PREFERRED EMBODIMENTS

Embodiments of the present disclosure will be described with reference to the drawings. In the drawings referred to below, the same or corresponding members are denoted by the same reference numerals.

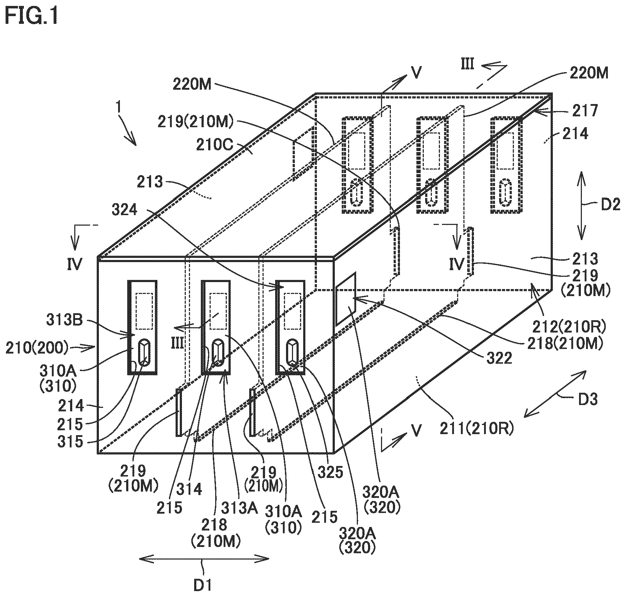

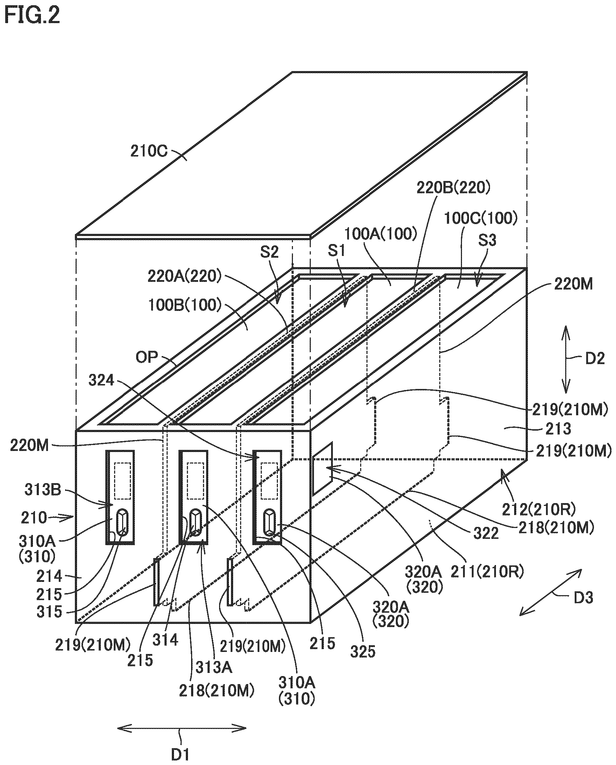

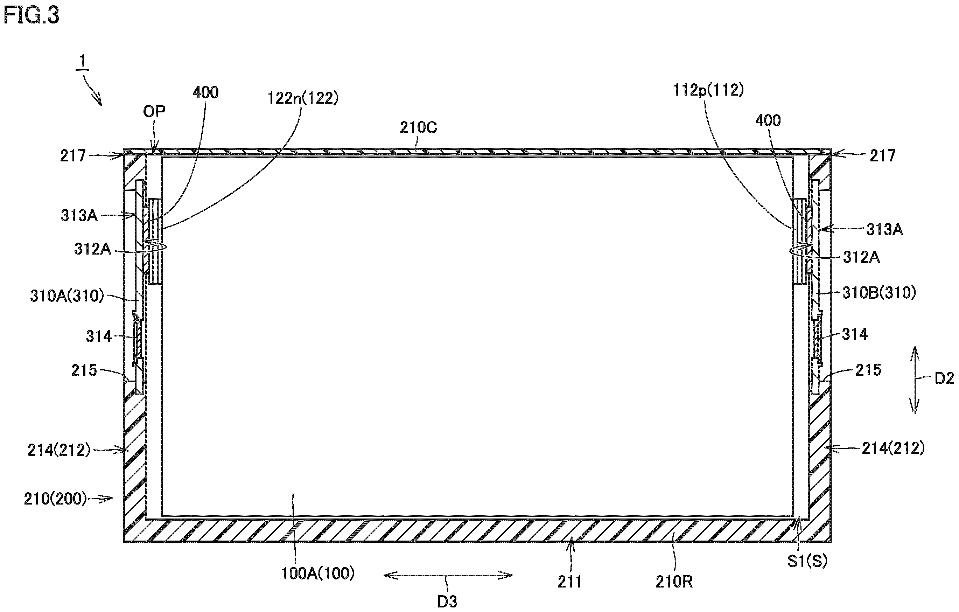

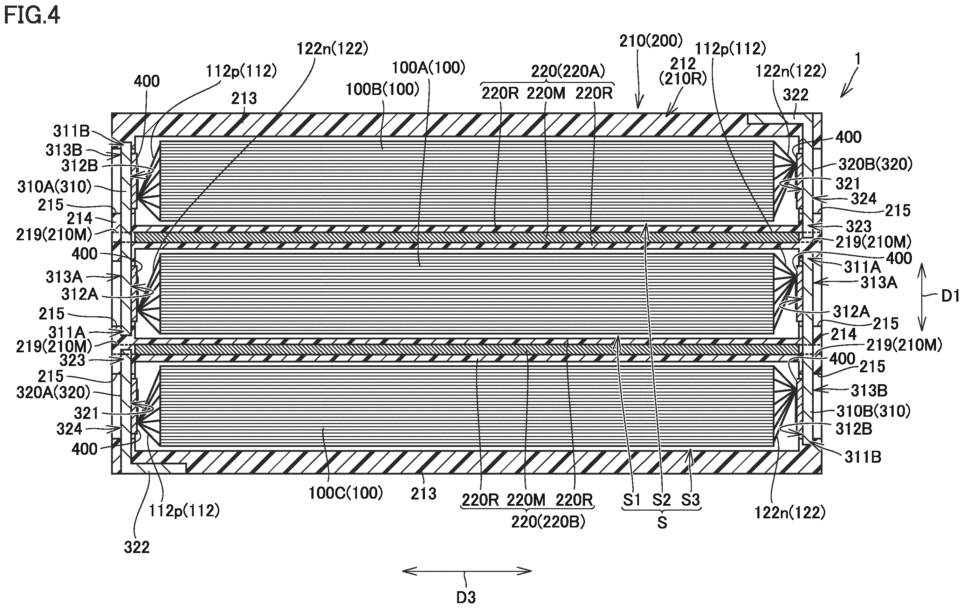

Fig. 1 is a perspective view showing a power storage module according to an embodiment. Fig. 2 is a partially exploded perspective view of the power storage module according to an embodiment. Fig. 3 is a cross-sectional view of the power storage module of Fig. 1 taken along a line III-III. Fig. 4 is a cross-sectional view of the power storage module of Fig. 1 taken along a line IV-IV.

As shown in Figs. 1 to 4, a power storage module 1 according to an embodiment of the present disclosure includes a plurality of electrode assemblies 100, a case 200, at least one connection conductive member 310, and an external conductive member 320. A plurality of electrode assemblies 100 are arranged in the first direction D1. The case 200 houses the plurality of electrode assemblies 100. The connection conductive member 310 is disposed at a side of the plurality of electrode assemblies 100 in the third direction D3, and electrically connects the plurality of electrode assemblies 100 adjacent to each other. The second direction D2 described later is a direction orthogonal to the first direction D1, and the third direction D3 is a direction orthogonal to both the first direction D1 and the second direction D2.

In this embodiment, the plurality of electrode assemblies 100 include a first electrode assembly 100A, a second electrode assembly 100B, and a third electrode assembly 100C. The third electrode assembly 100C is located opposite to the second electrode assembly 100B when viewed from the first electrode assembly 100A. In the present embodiment, the second electrode assembly 100B is located at an endmost position in the first direction D1 among the plurality of electrode assemblies 100. Among the plurality of electrode assemblies 100, the third electrode assembly 100C is located at an endmost position in the first direction D1 and opposite to the second electrode assembly 100B. The plurality of electrode assemblies 100 may include four or more electrode assemblies.

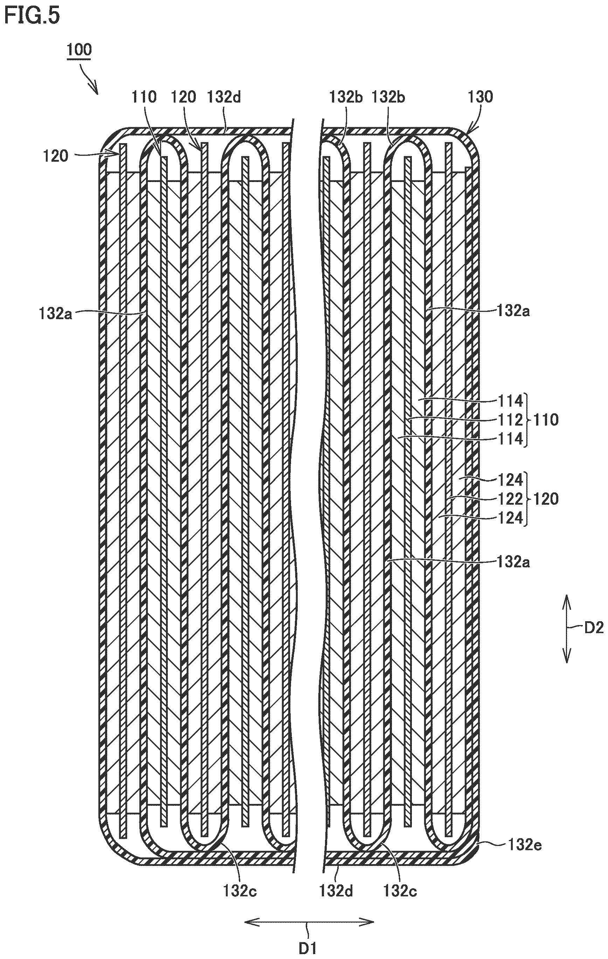

Fig. 5 is a cross-sectional view of the electrode assembly of the power storage module of Fig. 1 taken along a line V-V. As shown in Fig. 5, each of the plurality of electrode assemblies 100 includes a plurality of electrodes 110 and 120 and a separator 130. In this embodiment, the electrode assembly 100 is an electrode assembly for a secondary battery such as a lithium-ion secondary battery.

As shown in Fig. 5, the plurality of electrodes 110 and 120 are arranged in the first direction D1. The plurality of electrodes 110 and 120 have a plurality of positive electrodes 110 and a plurality of negative electrodes 120.

Each positive electrode 110 is formed in a rectangular shape elongated in the third direction D3 (a direction orthogonal to the plane of Fig. 5). Each positive electrode 110 includes a positive electrode current collector foil 112 and a positive electrode active material layer 114 provided on both surfaces of the positive electrode current collector foil 112. The positive electrode current collector foil 112 has a positive electrode tab 112p (see Figs. 3 and 4) in which the positive electrode active material layer 114 is not provided. The positive electrode tab 112p protrudes toward one side in the third direction D3.

Each negative electrode 120 is formed in a rectangular shape elongated in the third direction D3. Each negative electrode 120 includes a negative electrode current collector foil 122 and a negative electrode active material layer 124 provided on both surfaces of the negative electrode current collector foil 122. The negative electrode current collector foil 122 has a negative electrode tab 122n (see Figs. 3 and 4) in which the negative electrode active material layer 124 is not provided. The negative electrode tab 122n protrudes toward the other side in the third direction D3.

The separator 130 insulates the positive electrode 110 from the negative electrode 120. The separator 130 is made from an insulating material, and has minute voids that allow penetration of ions. As shown in Fig. 5, the separator 130 is folded.

The separator 130 has a rectangular shape before being folded. The separator 130 is folded between the electrodes 110 and 120. The separator 130 includes a plurality of intervening portions 132a, a plurality of upper folded portions 132b, a plurality of lower folded portions 132c, and an outermost covering portion 132d.

Each intervening portion 132a is interposed between a pair of electrodes 110 and 120 adjacent to each other in one direction. That is, each intervening portion 132a has a function of insulating the positive electrode 110 and the negative electrode 120. Each intervening portion 132a is formed of a rectangular region.

The upper folded portions 132b connect an upper end portion of one of the plurality of intervening portions 132a and an upper end portion of the intervening portion 132a adjacent to the one intervening portion 132a on one side of the plurality of intervening portions 132a in one direction. In the present embodiment, the upper folded portion 132b is disposed above the positive electrode 110.

Each lower folded portion 132c connects a lower end portion of the one intervening portion of the plurality of intervening portions 132a and a lower end portion of the intervening portion 132a adjacent to the one intervening portion on the other side in one direction of the plurality of intervening portions 132a. In the present embodiment, the lower folded portion 132c is disposed below the negative electrode 120. In other words, the negative electrode 120 is disposed on the lower folded portion 132c.

The outermost covering portions 132d collectively cover the upper folded portions 132b and the lower folded portions 132c. More specifically, the outermost covering portion 132d covers all of the electrodes 110 and 120, all of the intervening portions 132a, all of the upper folded portions 132b, and all of the lower folded portions 132c while winding around the central axis parallel to the third direction D3. The terminal end 132e of the outermost covering portion 132d is set so as not to overlap the positive electrode active material layer 114 and the negative electrode active material layer 124 in one direction. In the present embodiment, the terminal end 132e of the outermost covering portion 132d is provided below each of the electrodes 110 and 120. The peripheral surfaces and bottom surfaces of the plurality of electrodes 110 and 120 and the separator 130 may or may not be covered with an insulating film. The peripheral surfaces and bottom surfaces of the plurality of electrodes 110, 120 and the separator 130 may be in direct contact with the case 200.

As shown in Figs. 1 to 4, the case 200 includes a case body 210 and at least one partition portion 220.

The case body 210 surrounds the plurality of electrode assemblies 100. The case body 210 includes a resin main body 210R, a plurality of metal portions 210M, and a lid 210C.

The resin main body 210R is made from a resin composition. The resin main body 210R includes a bottom wall portion 211, a peripheral sidewall portion 212, and a hole 215.

In the case body 210 (resin main body 210R), the bottom wall portion 211 is positioned on one side in the second direction D2. The bottom wall portion 211 extends along the first direction D1 and the third direction D3. When viewed from the second direction D2, the bottom wall portion 211 has a rectangular outer shape.

The peripheral sidewall portion 212 is formed integrally with the bottom wall portion 211. The peripheral sidewall portion 212 extends upright in the second direction D2 from the peripheral edge of the bottom wall portion 211. The peripheral sidewall portion 212 forms an opening OP that opens in the direction opposite to the bottom wall portion 211.

The peripheral sidewall portion 212 includes a pair of first wall portions 213 and a pair of second wall portions 214. The pair of first wall portions 213 is arranged in the first direction D1. The pair of first wall portions 213 extends along the third direction D3. The pair of second wall portions 214 is arranged in the third direction D3. The pair of second wall portions 214 extends along the first direction D1.

The hole 215 is provided to expose a part of the connection conductive member 310 to the outside of the case body 210 (resin main body 210R). The hole 215 is closed by the connection conductive member 310. Specifically, the hole 215 is provided in the peripheral sidewall portion 212, and more specifically, is provided in the second wall portion 214.

In the present embodiment, the resin main body 210R has a plurality of holes 215 as the holes 215 described above. Among the plurality of holes 215, the external conductive member 320 is exposed from another hole 215 different from the hole 215 described above.

The metal portion 210M is disposed in the resin main body 210R. The details of the metal portion 210M will be described later.

The lid 210C closes the opening OP. In the present embodiment, at least a portion of the lid 210C that faces the peripheral sidewall portion 212 is made from a resin composition. The lid 210C has a flat plate shape or a film shape.

The lid 210C may be a stack including a resin layer for lid made of the resin composition and a barrier layer. Specifically, the lid 210C may be a laminate film in which a barrier layer made of aluminum or the like is laminated on the lid resin layer. The lid 210C may be a plate-like member in which a metal plate such as aluminum is laid on a lid resin layer. The barrier layer or metal plate may be disposed inside the lid resin layer.

The lid 210C and the peripheral sidewall portion 212 are thermally welded to each other, whereby a weld portion 217 is formed in the case body 210. Instead of forming the weld portion 217, the lid 210C and the peripheral sidewall portion 212 may be joined to each other by other known joining methods such as an adhesive.

The partition portion 220 is positioned between a plurality of adjacent electrode assemblies 100 to partition the accommodation space S of the case body 210. The case 200 according to the present embodiment includes a plurality of partition portions 220. The plurality of partition portions 220 include a first partition portion 220A and a second partition portion 220B. The plurality of partition portions 220 may include three or more partition portions.

In the accommodation space S of the case body 210, a first compartment S 1 and a second compartment S2 adjacent to the first compartment S1 with the partition portion 220 (first partition portion 220A) interposed therebetween are formed by the partition portion 220 (first partition portion 220A). In addition, the first compartment S 1 and a third compartment S3 adjacent to the first compartment S 1 with the second partition portion 220B interposed therebetween are formed by the second partition portion 220B in the accommodation space S. The third compartment S3 is positioned opposite to the second compartment S2 as seen from the first compartment S1.

Among the plurality of electrode assemblies 100, the first electrode assembly 100A is accommodated in the first compartment S1. The second electrode assembly 100B is accommodated in the second compartment S2. The third electrode assembly 100C is accommodated in the third compartment. An electrolyte solution is injected into the accommodation space S (the first compartment S1, the second compartment S2, and the third compartment S3). The electrolyte solution is not shown. The method of injecting the electrolyte solution is not particularly limited. The electrolyte solution may be injected from the opening OP before the opening OP is closed by the lid 210C.

Each of the partition portions 220 includes a pair of resin layers 220R and a metal layer 220M (see Fig. 4). The pair of resin layers 220R are arranged in the first direction D1. The pair of resin layers 220R is made from a resin composition. The pair of resin layers 220R is formed integrally with the case body 210. Specifically, the pair of resin layers 220R is formed integrally with the resin main body 210R. More specifically, each of the pair of resin layers 220R is formed integrally with both the bottom wall portion 211 and the pair of second wall portions 214 in the peripheral sidewall portion 212.

In the present embodiment, examples of the above-described "integrally formed" method include a method in which molding and joining of each component are performed simultaneously in one step by a well-known method such as injection molding, and a method in which a plurality of component components are separately molded and then joined to each other by a well-known joining method such as welding, or adhesion.

The partition portion 220 and the lid 210C may or may not be joined to each other by thermal welding.

Here, a resin composition which can form the resin main body 210R, the lid resin layer of the lid 210C, and the resin layer 220R of the partition portion 220 in the present embodiment will be described.

The resin composition may contain polycarbonate, polyethylene, polypropylene, polyvinyl, polyamide, polyester, polyphenylene sulfide (PPS), polyphenylene ether, polystyrene, polycyclic olefin copolymer, acrylonitrile-butadienestyrene copolymer, liquid crystal polymer (LCP), fluororesin, a mixture thereof, an alloy thereof, or a copolymer thereof as a base polymer. The base polymer is not limited thereto.

The resin composition may contain polyolefin, liquid crystal polymer, or fluororesin as a base polymer. The polyolefin may include High Density Polyethylene (HDPE). High density polyethylene, liquid crystal polymer, or fluororesin has a relatively low water vapor permeability. Therefore, the moisture permeability resistance of the case 200 including the resin main body 210R containing them is improved.

The liquid crystal polymer may include structural units derived from an oligomer of hydroxybenzoic acid. The liquid crystal polymer may further contain two or more kinds selected from the group consisting of HNA (2,6-hydroxynaphthoic acid), TPA (terephthalic acid), IPA (isophthalic acid), HQ (hydroquinone), BP (biphenol), PET (polyethylene terephthalate) and PEN (polyethylene naphthalate), in addition to the oligomer of hydroxybenzoic acid, and may be copolymerized with the oligomer of hydroxybenzoic acid (HBA).

The fluororesin may be polytetrafluoroethylene (PTFE), polyvinylidene difluoride (PVDF), polychlorotrifluoroethylene (PCTFE), or a mixture thereof, or a copolymer thereof. The fluororesin is hydrophobic. Thus, relative to the total weight of the resin composition, the resin composition may contain, for example, about 20% by weight or less, about 15% by weight or less, about 10% by weight or less, about 3% by weight to about 10% by weight, about 5% by weight to about 10% by weight of fluororesin. When the content of the fluororesin falls within the above ranges, it is considered that the molded article made from the resin composition has an effect of blocking moisture from the surface of the molded article in contact with the outside air.

In this embodiment, it is preferable that the base polymer of the resin composition constituting the lid 210C and the base polymer of the resin composition constituting the pair of resin layers 220R of each of the resin main body 210R and the plurality of partition portions 220 are the same. Thereby, these components are easily welded to each other. Consequently, the weld portion 217 can be easily formed. From the viewpoint of performing thermal welding, the base polymer is preferably polyethylene or polypropylene.

The resin composition may further contain an inorganic hygroscopic agent or graphite from the viewpoint of suppressing water vapor permeability. The resin composition may further contain a substance known as an existing moisture barrier substance in addition to graphite.

The metal layer 220M in the partition portion 220 is disposed between the resin layers 220R of the pair. The metal layer 220M extends in a direction orthogonal to the first direction D1. Specifically, the metal layer 220M extends in both the second direction D2 and the third direction D3.

Here, the details of the plurality of metal portions 210M disposed in the resin main body 210R will be described. Each of the plurality of metal portions 210M is connected to the metal layer 220M of the partition portion 220 (see Figs. 1 and 2). Each of the plurality of metal portions 210M is exposed to the outside space of the case body 210. The metal portion 210M and the metal layer 220M are made of a metal such as stainless steel, aluminum, or copper.

The plurality of metal portions 210M includes a bottom exposed portion 218 and a pair of side exposed portions 219. The bottom exposed portion 218 is disposed inside the bottom wall portion 211. The bottom exposed portion 218 is exposed from the bottom wall portion 211.

The pair of side exposed portions 219 is disposed inside the peripheral sidewall portion 212. The pair of side exposed portions 219 is exposed from the peripheral sidewall portion 212. Specifically, the pair of side exposed portions 219 are disposed inside the pair of second wall portions 214, respectively. The pair of side exposed portions 219 are respectively exposed from the pair of second wall portions 214.

Next, the connection conductive member 310 and the external conductive member 320 will be described. In the present embodiment, the power storage module 1 includes a plurality of connection conductive members 310. The plurality of connection conductive members 310 includes a first connection conductive member 310A and a second connection conductive member 310B. The plurality of connection conductive members 310 may include three or more connection conductive members. In the present embodiment, the power storage module 1 includes the first external conductive member 320A and the second external conductive member 320B as the external conductive member 320.

The connection conductive member 310 (the first connection conductive member 310A and the second connection conductive member 310B) includes a first end portion 311A, a second end portion 311B, a first inner surface portion 312A, a second inner surface portion 312B, a first outer surface portion 313A, and a second outer surface portion 313B.

In the first connection conductive member 310A, the first end portion 311A is an end portion on one side of the first connection conductive member 310A in the first direction D1, and is embedded in the peripheral sidewall portion 212 (one of the second wall portions 214) of the resin main body 210R. The second end portion 311B is an end portion on the other side of the first connection conductive member 310A in the first direction D1, and is embedded in the peripheral sidewall portion 212 (one of the second wall portions 214) of the resin main body 210R.

In the first connection conductive member 310A, the first inner surface portion 312A is exposed to the first compartment S1 and electrically connected to the electrode tab (negative electrode tab 122n) of the first electrode assembly 100A. The second inner surface portion 312B is exposed to the second compartment S2 and electrically connected to the electrode tab (positive electrode tab 112p) of the second electrode assembly 100B.

In the second connection conductive member 310B, the first end portion 311A is an end portion on one side of the second connection conductive member 310B in the first direction D1, and is embedded in the peripheral sidewall portion 212 (the other second wall portion 214) of the resin main body 210R. The second end portion 311B is an end portion on the other side of the second connection conductive member 310B in the first direction D1, and is embedded in the peripheral sidewall portion 212 (the other second wall portion 214) of the resin main body 210R.

In the second connection conductive member 310B, the first inner surface portion 312A is exposed to the first compartment S1 and electrically connected to the electrode tab (positive electrode tab 112p) of the first electrode assembly 100A. The second inner surface portion 312B is exposed to the third compartment S3 and electrically connected to the electrode tab (negative electrode tab 122n) of the third electrode assembly 100C.

In each of the connection conductive members 310, the first outer surface portion 313A is located opposite to the first inner surface portion 312A, and is exposed to the outside of the case body 210 through the hole 215. Each of the connection conductive members 310 is provided with a pressure release valve 314 capable of releasing the pressure on the first inner surface portion 312A side to the first outer surface portion 313A side.

In each of the connection conductive members 310, the second outer surface portion 313B is located opposite to the second inner surface portion 312B and is exposed to the outside of the case body 210 through the other hole 215. Each of the connection conductive members 310 is provided with another pressure release valve 315 capable of releasing the pressure on the second inner surface portion 312B side to the first outer surface portion 313A side.

The first external conductive member 320A is located at a side of the third electrode assembly 100C in the third direction D3, and is electrically connected to the third electrode assembly 100C. The second external conductive member 320B is located at a side of the second electrode assembly 100B in the third direction D3, and is electrically connected to the second electrode assembly 100B.

Each of the external conductive members 320 includes a third inner surface portion 321, an external connection surface portion 322, and an embedded end portion 323.

In the first external conductive member 320A, the third inner surface portion 321 is exposed to the accommodation space S (third compartment S3), and is electrically connected to the electrode tab (positive electrode tab 112p) of the third electrode assembly 100C. In the second external conductive member 320B, the third inner surface portion 321 is exposed to the accommodation space S (second compartment S2), and is electrically connected to the electrode tab (negative electrode tab 122n) of the second electrode assembly 100B.

In each of the external conductive members 320, the external connection surface portion 322 is exposed to the outside of the case body 210 (the resin main body 210R) in the first direction D1. The embedded end portion 323 is an end portion opposite to the external connection surface portion 322 side in the first direction D1, and is embedded in the resin main body 210R.

Each external conductive member 320 further includes a third outer surface portion 324. The third outer surface portion 324 is located opposite to the third inner surface portion 321. The third outer surface portion 324 is exposed to the outside of the case body 210 (the resin main body 210R) through one of the plurality of holes 215. Each of the external conductive members 320 is provided with another pressure release valve 325 capable of releasing the pressure on the third inner surface portion 321 side to the third outer surface portion 324 side.

Each of the connection conductive members 310 and each of the external conductive members 320 are made of a metal such as stainless steel, aluminum, or copper.

In the present embodiment, the power storage module 1 further includes a plurality of current collector members 400. The plurality of current collector members 400 are disposed between the positive electrode tab 112p of each electrode assembly 100 and the connection conductive member 310 or the external conductive member 320, and between the negative electrode tab 122n of each electrode assembly 100 and the connection conductive member 310 or the external conductive member 320. Each current collector member 400 is joined to each positive electrode tab 112p or each negative electrode tab 122n by welding. Each of the current collector members 400 is joined to the first inner surface portion 312A, the second inner surface portion 312B, or the third inner surface portion 321 by welding.

The plurality of current collector members 400 may comprise a metallic material such as aluminum or copper, for example. The power storage module 1 may not include the current collector member 400. When the current collector member 400 is not included, each of the positive electrode tabs 112p and each of the negative electrode tabs 122n may be directly joined to the adjacent first inner surface portion 312A, the second inner surface portion 312B, or the third inner surface portion 321 by welding.

As described above, the power storage module 1 according to the embodiment of the present disclosure includes a plurality of electrode assemblies 100 and the case 200. The plurality of electrode assemblies 100 are arranged in the first direction D1. The case 200 houses the plurality of electrode assemblies 100. The case 200 includes a case body 210 and at least one partition portion 220. The case body 210 surrounds the plurality of electrode assemblies 100. The partition portion 220 is located between the electrode assemblies 100 adjacent to each other to partition the accommodation space S of the case body 210. The partition portion 220 includes a pair of resin layers 220R and a metal layer 220M. The pair of resin layers 220R is formed integrally with the case body 210 and the resin layers are arranged in the first direction D1. The metal layer 220M is disposed between the resin layers 220R and extends in a direction orthogonal to the first direction D1.

According to the above configuration, the metal layer 220M can prevent heat generated by the electrode assembly 100 disposed on one side of the partitioned accommodation space S from being transmitted to the other side of the accommodation space S through the partition portion 220. This is because when the heat is transmitted to the metal layer 220M, the heat is diffused in the direction orthogonal to the first direction D1, and as a result, the heat is easily discharged to the outside of the case body 210.

In the present embodiment, the case body 210 includes a resin main body 210R and a metal portion 210M. The resin main body 210R is formed integrally with the partition portion 220. The metal portion 210M is located in the resin main body 210R, contiguous to the metal layer 220M, and exposed to the outside space of the case body 210.

According to the above configuration, the heat transmitted to the metal layer 220M is easily discharged to the outside of the case body 210 through the metal portion 210M.

In the present embodiment, the metal portion 210M includes a bottom exposed portion 218. The bottom exposed portion 218 is disposed in the bottom wall portion 211 and exposed from the bottom wall portion 211.

According to the above configuration, the heat transmitted to the metal layer 220M is easily discharged to the outside of the case body 210 through the bottom exposed portion 218.

In the present embodiment, the metal portion 210M includes a side exposed portion 219. The metal portion 210M is disposed in the peripheral sidewall portion 212 and exposed from the peripheral sidewall portion 212.

According to the above configuration, the heat transmitted to the metal layer 220M is easily discharged to the outside of the case body 210 through the side exposed portion 219.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage module comprising:
a plurality of electrode assemblies (100) arranged in a first direction (D1); and
a case (200) housing the plurality of electrode assemblies (100),
the case (200) including:
a case body (210) surrounding the plurality of electrode assemblies (100); and
at least one partition portion (220) located between the electrode assemblies (100) adjacent to each other to partition an accommodation space (S) of the case body (210), wherein
the partition portion (220) includes a pair of resin layers (220R) and a metal layer (220M),
the pair of resin layers (220R) is formed integrally with the case body (210) and the resin layers (220R) of the pair are arranged in the first direction (D1), and
the metal layer (220M) is located between the resin layers (220R) of the pair and extends in a direction orthogonal to the first direction (D1).

2. The power storage module according to claim 1, wherein
the case body (210) includes:
a resin main body (210R) formed integrally with the partition portion (220); and
a metal portion (210M) located in the resin main body (210R), contiguous to the metal layer (220M), and exposed to an external space of the case body (210).

3. The power storage module according to claim 2, wherein
the resin main body (210R) includes: a bottom wall portion (211) located at one side in a second direction (D2) orthogonal to the first direction (D1); and a peripheral sidewall portion (212) formed integrally with the bottom wall portion (211), extending upright in the second direction (D2) from a peripheral edge of the bottom wall portion (211), and forming an opening (OP) that opens in a direction opposite to the bottom wall portion (211),
the case body (210) further includes a lid (210C) closing the opening (OP), and at least a portion of the lid (210C) that faces the peripheral sidewall portion (212) is made from a resin composition, and
the metal portion (210M) includes a bottom exposed portion (218) located in the bottom wall portion (211) and exposed from the bottom wall portion (211).

4. The power storage module according to claim 2, wherein
the resin main body (210R) includes: a bottom wall portion (211) located at one side in a second direction (D2) orthogonal to the first direction (D1); and a peripheral sidewall portion (212) formed integrally with the bottom wall portion (211), extending upright in the second direction (D2) from a peripheral edge of the bottom wall portion (211), and forming an opening (OP) that opens in a direction opposite to the bottom wall portion (211),
the case body (210) further includes a lid (210C) closing the opening (OP), and at least a portion of the lid (210C) that faces the peripheral sidewall portion (212) is made from a resin composition, and
the metal portion (210M) includes a side exposed portion (219) located in the peripheral sidewall portion (212) and exposed from the peripheral sidewall portion (212).

5. The power storage module according to claim 2, wherein
the resin main body (210R) includes: a bottom wall portion (211) located at one side in a second direction (D2) orthogonal to the first direction (D1); and a peripheral sidewall portion (212) formed integrally with the bottom wall portion (211), extending upright in the second direction (D2) from a peripheral edge of the bottom wall portion (211), and forming an opening (OP) that opens in a direction opposite to the bottom wall portion (211),
the case body (210) further includes a lid (210C) closing the opening (OP), and at least a portion of the lid (210C) that faces the peripheral sidewall portion (212) is made from a resin composition, and
the metal portion (210M) includes a bottom exposed portion (218) located in the bottom wall portion (211) and exposed from the bottom wall portion (211), and a side exposed portion (219) located in the peripheral sidewall portion (212) and exposed from the peripheral sidewall portion (212).
